# EUROPEAN PATENT SPECIFICATION

(11) **EP 3 558 865 B1**
(45) Date of publication and mention of the grant of the patent: **02.12.2026**
(21) Application number: 17832351.5
(22) Date of filing: 21.12.2017
(51) Int. Cl.: C01B 32/18

(54) **METHODS FOR THE PREPARATION OF CARBON NANO-ONIONS**
VERFAHREN ZUR HERSTELLUNG VON KOHLENSTOFF-NANOONIONS
MÉTHODE DE PRÉPARATION DE NANO-OIGNONS DE CARBONE

(30) Priority: 21.12.2016 IT 201600129538
(43) Date of publication of application: 30.10.2019
(73) Proprietor: Fondazione Istituto Italiano di Tecnologia, 16163 Genova (IT)
(72) Inventor: GIORDANI, Silvia, 16163 Genova (IT)
(74) Representative: Studio Torta S.p.A.
(86) International application number: PCT/IB2017/058287
(87) International publication number: WO 2018/116240

(56) References cited:
- US-A1- 2006 241 236
- TOMITA S ET AL: "Diamond nanoparticles to carbon onions transformation: X-ray diffraction studies", CAR, ELSEVIER, OXFORD, GB, vol. 40, no. 9, 1 August 2002 (2002-08-01), pages 1469 - 1474, XP004361211, ISSN: 0008-6223, DOI: 10.1016/S0008-6223(01)00311-6
- PLONSKA-BRZEZINSKA MARTA E ET AL: "Post-modification by low-temperature annealing of carbon nano-onions in the presence of carbohydrates", CARBON, vol. 67, 8 October 2013 (2013-10-08), pages 304 - 317, XP028790257, ISSN: 0008-6223, DOI: 10.1016/J.CARBON.2013.09.093
- ZEIGER MARCO ET AL: "Understanding structure and porosity of nanodiamond-derived carbon onions", CARBON, vol. 84, 23 December 2014 (2014-12-23), pages 584 - 598, XP029132098, ISSN: 0008-6223, DOI: 10.1016/J.CARBON.2014.12.050

## Description

### TECHNICAL FIELD

The present invention concerns a method for obtaining carbon nano-onions, having improved purity and increased yields.

### BACKGROUND ART

By the term carbon "nano-onions" here and below we mean nanostructures closed in the shape of a vesicle, for example rounded or elongated, formed of several mono- or pluri-atomic layers of carbon overlapping one another and generally delimiting an empty space inside them.

Carbon nano-onions, indicated in an abbreviated form as CNOs (Carbon Nano Onions) or p-CNOs (Pristine Carbon Nano Onions), due to their exceptional physical-chemical characteristics, have numerous potential practical applications, from biology to medicine, for example as carriers of active substances, in the field of chemical catalysis, in electromagnetic shielding, for gas stowage, and in the field of optical limiting.

Generally, and according to the most consolidated current technology, carbon nano-onions (below also shortened to carbon "onions") are obtained by thermal transformation of nano-diamonds, available on the market, by means of a process involving several steps.

from sp3 hybridized carbon when the nano-diamonds are heated up to approximately 200°C. By further increasing the temperature, functional groups such as carboxylic groups, anhydride and lactones are effectively removed, until gaseous CO and CO₂ are generated. The detachment of functional groups causes the formation of bonds "dangling" on the carbon atoms, which combine and reconstruct like π-bonds, with consequent onset of graphitization when the temperature nears 800-900°C. The reconstructive phase transformation creates shells of sp2 hybridized carbon on the outside of the nano-diamonds, followed by continuous internal graphitization, until completely consuming the nano-diamond inside the new particle being formed.

A method for obtaining carbon nano-onions from nano-diamonds is the method according to Echegoyen et al. described in US2009/0220407: commercially available nano-diamonds are placed in a graphite crucible and transferred to an Astro carbonization furnace. The air in the furnace is removed by application of a vacuum followed by flushing with helium. The process is repeated twice to ensure complete removal of the air. Subsequently, the nano-diamonds are heated to 1,650°C in a helium atmosphere by means of one single heating ramp of 20°C/minute. The final temperature is maintained for one hour, then the material is slowly cooled to ambient temperature for the duration of one hour. After opening of the furnace, the CNOs obtained from the transformation are annealed in air at 400°C for one hour to remove any amorphous carbon that may be present in the sample.

According to this method, the process of formation of carbon nano-onions therefore comprises the formation of fragments of graphite, their connection and curvature in graphite sheets between the planes (111) of the nano-diamonds with closing of the graphite layers being formed.

The graphitization preferentially begins at the crystalline planes (111) of the nano-diamonds with formation of zigzag hexagonal rings, which can be easily reorganized in graphite sheets; consequently, fragments of graphite with different numbers of carbon atoms exfoliate from the outer surface of any plane (111) of the nano-diamonds, surrounding them. These fragments are reorganized into pentagonal or polygonal rings to form a closed shell. The graphite fragments create a tangle around the surface of the diamond particles with elimination of the "dangling" bonds and generation of closed graphite shells to reduce the surface energy. The inner diamond maintains its original shape but is consumed little by little in the course of the transformation. Consequently, the graphite layers close one by one around the diamond surface and the nano-onions that form are similar in shape to the original nano-diamond particles.

At temperatures between 1,100°C and 1,300°C, the carbon shells which are initially very disordered become increasingly graphitic, with fewer surface defects obtaining a complete transformation into highly ordered carbon onions at 1,800-2,000°C. The reduction in density from nano-diamonds (3.3 g/cm³) to graphitic carbon (1.9-2.2 g/cm³) induces an increase in the volume of the particles. Therefore, the number of surface atoms of the diamonds is not sufficient to form a closed casing on the outer side of each particle in transformation. The missing carbon atoms therefore come from the edges or inner layers of the diamond below, which leads to complete closing of the carbon shells like an onion. The elimination of free bonds on the surface of the nano-particles and closing of the graphite sheets result in a reduction in the surface energy, which should therefore be considered the driving force necessary to form closed graphite shells.

The transformation process described and a consequence of the preparation method according to *Echegoyen et al.* is effective, but produces carbon nano-onions that are not completely pure (since they include not only amorphous carbon, but also nano-ribbons and carbon rods) and have a dimension ranging from 10 to 15 nm, which can considerably limit their practical application.

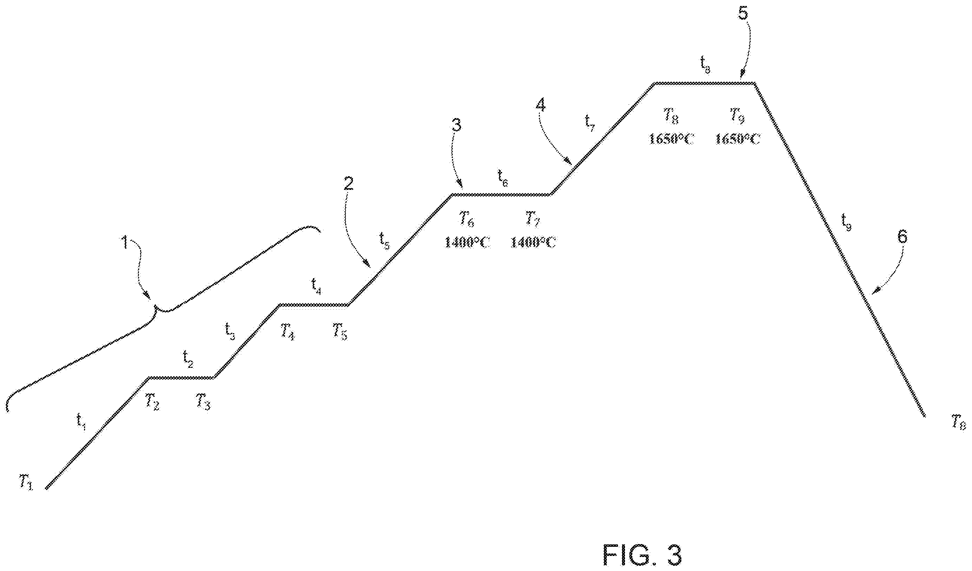

Said problems are not solved either by US2006241236, or by the method illustrated in the article by TOMITA et al. "Diamond nanoparticles to carbon onions transformation: X-ray Diffraction Studies"- CAR, ELSEVIER, OXFORD; GB, vol. 40, no. 9, 1 August 2002, pages 1469-1474; the first document points to the possibility of obtaining carbon nano-onions also with diameter of 2 nm, but then provides an enormous range from 5 nm to 1 micron; the second document clearly shows in figure 3 that the transformation of the nano-diamonds into carbon nano-onions is not completed by the thermal cycle indicated, since the peaks typical of the nano-diamonds at 220d, 311d and 400d are still present in the XRD spectrum.

### DISCLOSURE OF INVENTION

The object of the present invention is to provide a method for the preparation/synthesis of carbon nano-onions starting from commercial nano-diamonds which is simple to carry out and which leads to the formation of carbon nano-onions having a high purity and smaller dimensions than those that can be obtained with the method according to US2009/0220407.

The invention therefore concerns a method for obtaining carbon nano-onions starting from nano-diamonds as specified in the attached claims.

In particular the method according to the invention comprises, like the known method of *Echegoyen et al.,* the steps of:
i)- heating the nano-diamonds to a first predetermined temperature, ranging from 1,200 to 1,800°C, under conditions such as to produce layer-by-layer carbonization of the nano-diamonds;
ii)- maintaining the first predetermined temperature constant for a first predetermined time so as to transform the nano-diamonds into carbon nano-onions; and
iii)- slowly cooling the carbon nano-onions.

According to the main characteristic of the invention, however, the heating step i) is carried out not by means of one single heating ramp, as in US2009/0220407, but by means of at least two successive heating ramps, and using for each heating ramp a different heating rate generally lower or much lower than those described in US2009/0220407. Furthermore, the slow cooling step is protracted only to reach a temperature equal to or lower than 200°C.

In particular, the heating step i) is carried out in an inert helium atmosphere and comprises:
- a first heating ramp in which the nano-diamonds are brought to a second predetermined temperature, greater than 1,000°C, and are maintained at said second predetermined temperature for a second predetermined time, so as to initiate the layer-by-layer carbonization of the nano-diamonds and produce a mixture of nano-diamonds in the transformation step into carbon nano-onions; and
- a second heating ramp, in which the mixture of nano-diamonds in the transformation step into carbon nano-onions is brought to said first predetermined temperature, then maintaining constant the first predetermined temperature for the first predetermined time.

The heating step i) is preceded by a pre-heating step from ambient temperature to a temperature below 1,000°C, performed by means of at least another two successive heating ramps, with the nano-diamonds remaining at least at a third predetermined temperature, lower than the second predetermined temperature, for a third predetermined time.

In particular, the pre-heating step is always carried out in an inert helium atmosphere and comprises three successive heating ramps: a first ramp in which the nano-diamonds are brought from ambient temperature to a temperature ranging from 150°C to 250°C and maintained at said temperature for a time in the order of ten or some tens of minutes; a second ramp in which the nano-diamonds are brought from the temperature ranging from 150°C to 250°C to a temperature ranging from 700°C to 900°C C and maintained at said temperature for some tens of minutes, in any case longer than the maintenance time at the temperature reached via the first heating ramp; and a third ramp in which the nano-diamonds are brought from the temperature ranging from 700°C to 900°C to the second predetermined temperature.

In total, the pre-heating step has a duration ranging from 240 to 300 minutes.

The second ramp of the heating step i) is performed operating at a heating rate lower than the heating rate at which the first ramp of the heating step i) is carried out; in combination, the second predetermined time is chosen with duration lower than that of the first predetermined time.

The first ramp of the heating step i) is carried out starting from a temperature of at least 700°C operating at a heating rate ranging from 4 to 9°C/minute, preferably 5°C/minute; in combination, the second ramp of the heating step i) is carried out operating at a heating rate ranging from 0.5 to 3.5 °C/minute, preferably 1°C/minute; the first predetermined time ranges from 50 to 70 minutes and is preferably 60 minutes; the second predetermined time is equal to at least half the first predetermined time and is generally equal to 30 minutes.

The second predetermined temperature is chosen equal to at least 1,400°C; and, in combination, the first predetermined temperature is chosen equal to at least 1,650°C.

The final step of slow cooling is carried out in a time equal to a few hours and in particular at least 4 hours and preferably approximately 5 hours.

All the steps described above can be carried out under an inert gas pressure which can be chosen within a wide interval, ranging from 1 to 20 psi (6.894 kPa to 137.88 kPa). Preferably, the steps according to the invention are carried out at atmospheric pressure.

The starting nano-diamonds are chosen according to the invention so as to present average dimensions of the crystals no greater than 5 nm; commercial nano-diamonds produced by the firm Carbodeon Ltd., type "uDiamont^{®} Molto", are preferably used but any other nano-diamond on sale, provided that it falls within the selected dimensional range, is suitable for use according to the method of the present invention.

Preferably, the method according to the present invention also comprises an annealing step of the carbon nano-onions, carried out at the end of the slow cooling step; the annealing step comprises a step of maintaining the carbon nano-onions at a temperature ranging from 400°C to 500°C for a period of a few hours, preceded by a heating step and followed by a cooling step, each performed by means of one single temperature variation ramp with duration of at least 30 minutes.

The carbon nano-onions obtained according to the method described above are characterized by the following physical properties:
- rounded, substantially spherical shape with an average diameter of 5 ± 1.9 nm;
- formed of 8-10 concentric graphite shells having a totally ordered geometry with distance between the shells no greater than 0.35 nm;
- with XRD spectrum having at least four peaks typical of the graphite: for the plane (002) at approximately 26°, for the plane (100) at approximately 43°, for the plane (004) at approximately 54° and for the plane (110) at approximately 79°;
- with XRD spectrum NOT having any peak typical of the nano-diamonds, in particular not having peaks for the plane (220) at approximately 75°, for the plane (311) at approximately 90° and for the plane (400) at approximately 118°.

### BRIEF DESCRIPTION OF THE DRAWINGS

Further characteristics and advantages of the present invention will become clear from the following description of non-limiting embodiments thereof provided purely by way of example and with reference to the figures of the accompanying drawings, in which:
- Figure 1 illustrates a schematization of the synthesis process of p-CNOs;
- Figure 2 illustrates the XRD spectrum of the starting nano-diamonds compared with that of the product obtained by means of the method of the invention and shows the success of the transformation from nano-diamonds composed of sp3 carbon atoms into spherical carbon onions;
- Figure 3 is a diagram that illustrates the thermal, heating and cooling process used according to the method of the invention;
- Figure 4 is a low resolution microphotograph taken with a LRTEM - Low resolution transmission electron microscope - of carbon onions obtained according to the method described in US2009/0220407;
- Figure 5 is a low resolution microphotograph taken with a LRTEM - Low resolution transmission electron microscope - of carbon onions obtained according to the method of the present invention;
- Figure 6 is an analysis of the granulometric distribution of the carbon nano-onions obtained according to the method of the invention, performed by means of AFM - atomic force microscopy;
- Figure 7 is a high resolution microphotograph taken with a HRTEM - High resolution transmission electron microscope - of a carbon nano-onion obtained according to the method of the invention; and
- Figure 8 is a graph that illustrates the thermogravimetric analysis (TGA) of the starting nano-diamonds compared with that of the carbon nano-onions produced with the method of the invention.

### BEST MODE FOR CARRYING OUT THE INVENTION

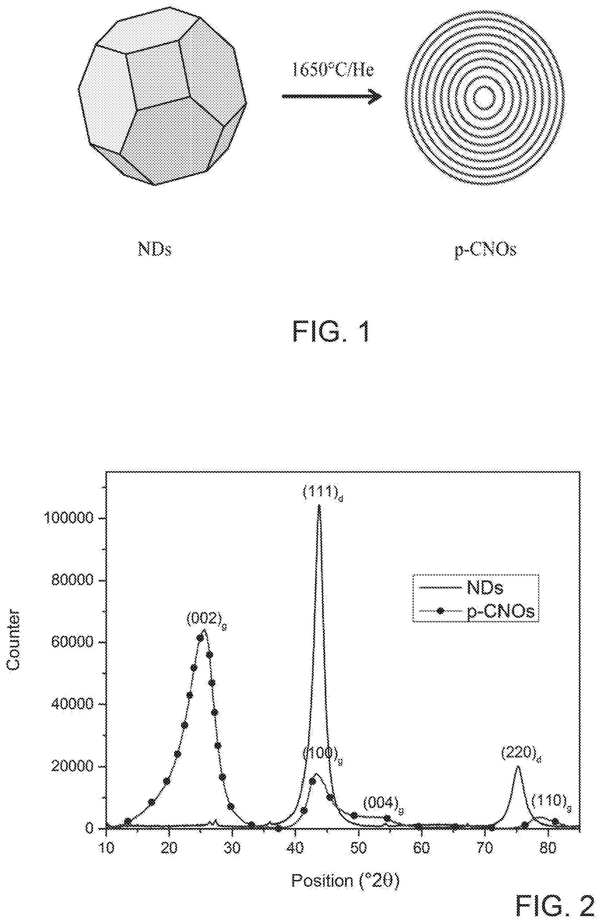

With reference to figures 1 and 3, the method according to the invention has the object of obtaining pure carbon nano-onions (p-NCOs) starting from commercial nano-diamonds (NDs) by means of carbonization achieved by heating in a protective helium atmosphere, therefore in total absence of oxygen, at a high temperature, equal to or greater than 1,600°C (figure 1).

According to figure 3, to obtain carbon onions having the desired characteristics, i.e. a high granulometric constancy, with very small average dimensions, much lower than 10 nm, and a high purity, i.e. composed practically exclusively of carbon atoms arranged in a highly ordered manner to form concentric shells, the procedure of heating to the necessary temperature to complete the transformation must be carried out in successive heating steps or ramps, alternating with pauses during which the temperature reached at the end of each heating step or ramp is maintained constant for a predetermined time interval.

In particular, the p-CNOs according to the invention are synthesized by means of thermal annealing of nano-diamonds (NDs) obtained from Carbodeon Ltd. (type: uDiamond^{®} Molto) and having dimensions of the crystals of 4.2 ± 0.5 nm; the thermal annealing is performed at 1650°C in a helium atmosphere using a tubular furnace.

The NDs are placed in a graphite crucible, then in the furnace. After evacuating the air present in the furnace and replacing it with an inert helium atmosphere, the NDs are kept one night under helium and then the furnace is switched on. The heating procedure used in the tubular furnace is shown in Figure 3.

Firstly, a pre-heating stage is performed, indicated overall in figure 3 by the reference number 1, in which the starting temperature is T1, corresponding to the ambient temperature.

The pre-heating stage 1 is performed according to an aspect of the invention by successive stages, i.e. in "steps"; in fact, the inside of the furnace is firstly brought to a temperature T2, preferably ranging from 200 to 300°C in a time t1 of less than one hour, for example 40 minutes, by means of one single first heating ramp; at this point, the temperature T2 is maintained constant for a time t2 lower than the time t1, for example 20 minutes; at the end of these first two heating stages, the nano-diamonds will be at a temperature T3 identical to T2.

Subsequently, by means of one single second heating ramp, the temperature T3 is raised in a time t3 preferably equal to 1 hour to a temperature T4 double or triple the temperature T3 and preferably ranging from 700 to 900°C and even more preferably equal to 800°C; at this point the temperature T4 is maintained constant for a time t4 greater than the time t2, for example 30 minutes; at the end of these second two heating stages, the nano-diamonds are at a temperature T5 identical to T4.

After the initial pre-heating 1 from ambient temperature to 800°C, for example, the nano-diamonds undergo a heating stage conducted so that, during said heating stage, the nano-diamonds are converted into carbon nano-onions.

According to the main aspect of the invention, the heating step with consequent transformation of the nano-diamonds takes place in two separate steps, in each of which one single heating ramp is applied with controlled heating rate followed by an isothermal heating step, i.e. maintenance of the furnace at constant temperature.

According to the illustration of figure 3, firstly the furnace temperature is raised from the temperature T5 to a temperature T6 ranging from 1,300 to 1,500°C, for example passing from 800°C to 1,400°C in a time t5 of a few hours, for example 2 hours, by means of one single heating ramp indicated in figure 3 by the reference number 2, applying a heating rate of 4-6°C/minute, preferably 5°C/minute; subsequently, the heating continues so as to maintain the temperature constant, for example at 1,400°C, for a time t6, for example 30 minutes; at the end of this isothermal step, the reaction mixture consisting of the starting nano-diamonds now at the stage of incipient transformation will be at a temperature T7, identical to T6.

Once the isothermal heating step has been completed, indicated in figure 3 by the reference number 3, the reaction mixture is slowly heated from the temperature T7 to a temperature T8, for example it is brought from 1,400°C to 1,650°C with a second, single, heating ramp indicated by the reference number 4 applying a heating rate lower than the previous one, for example with a heating rate of 1°C/minute; lastly, the reaction mixture, now at the stage of full transformation into nano-onions, is maintained at this temperature for a time t8, for example 1 hour, so that the heating step terminates at a temperature T9 identical to T8 by means of a final isothermal heating step indicated in figure 3 by the reference number 5.

The slow heating process implemented with the heating steps indicated by the references 1 to 5, for example between 1,400 and 1,650°C, surprisingly enables, according to the invention, the carbon onions to "accept" the change in the structure, avoiding local chemical attack of the carbon which produces graphitic impurities such as nano-ribbons of carbon and graphite rods.

Once the heating step has been completed, a controlled cooling step is carried out, indicated by the reference number 6, for a time t9, for example of four-five hours, during which the reaction mixture is brought from the temperature T9 to a temperature T10 equal to the ambient temperature, or to a temperature greater than the ambient temperature, for example 200°C, after which everything is left to cool again to ambient temperature.

At the end of the cooling step, the furnace is opened, and the transformed CNOs are preferably annealed again, in air, at 450°C for a few hours, for example four hours, to be sure of removing any amorphous carbon present.

Considering the overall process, the p-CNOs according to the invention are produced with a "step-by-step" heating ramp applying a mean heating rate of 3.5°C/minute. The yield of the process is typically between 86% and 88%.

XRD, TGA, Raman spectroscopy and TEM (at low and high resolution) can be used to characterize the p-CNOs produced.

The invention will now be further described by means of a series of practical implementation examples.

### EXAMPLES

### Synthesis

Two samples of 2.212 g of commercial NDs of Carbodeon Ltd. (Type: uDiamond^{®} Molto) with crystal dimensions of 4.2±0.5 nm were placed, in succession, in a graphitic crucible, then in a tubular furnace GSL-1700X-KS supplied by the company MTI. The air was removed by applying a vacuum, followed by flushing with helium. After a night under helium, the furnace was switched on.

The heating procedure used for a first sample is the one described in US2009/0220407, i.e. one single heating ramp is applied from ambient temperature to the temperature of 1,650°C with a heating rate of 20°C/minute; the heating procedure used for a second sample is the one of the invention and corresponds to the graph of figure 3.

After a pre-heating up to 800°C, the second sample is heated from 800°C to 1,400°C in 2 hours with a speed rate of 5°C/minute and remains at 1,400°C for 30 minutes. After this, the second sample is slowly heated from 1,400°C to 1,650°C with a heating speed (speed rate) of 1°C/minute and remains at this temperature for 1 hour.

After the process according to the invention, 1.835 g of p-CNOs were recovered from the second sample with a yield of 87%.

1.716 g of p-CNOs obtained from the second sample were placed in a graphitic crucible and then in a furnace for a second annealing process in air in order to remove any amorphous carbon present. The sample was heated in air to 450°C for 4 hours and then 1.684 g of p-CNOs were recovered with a yield of 98%.

### Oxidation

1.212 g of p-CNOs (pristine CNOs) were dispersed in 600 ml of a solution of 3M nitric acid and, after sonication for 20 minutes, the solution was stirred under reflux for 48 hours at 110°C. After cooling to room temperature (RT), oxy-CNOs were separated from the reaction mixture by means of centrifugation (20 minutes at 2,000 rpm) and filtering on a nylon filtering membrane (pore dimensions 0.2 micron) and washed with distilled water, DMF, methanol and acetone. After drying for a whole night at room temperature, 1.092 g of oxy-CNOs (code: AC67) were recovered.

### Characterization

The reaction products (p-CNOs) of the second sample, in addition to the reaction products of the first sample, were characterized by means of XRD, TGA, TEM at low and high resolution and AFM analyses. The results obtained are shown in figures 2 and 4 to 8.

The results of the XRD measurements are shown in figure 2; this measurement was taken in order to analyse the crystalline structure of the various samples. The XRD spectra of figure 2 show the success of the complete transformation of the starting nano-diamonds, composed of sp3 carbon atoms, into spherical carbon onions with a distance between the shells (intershell) of 0.35 nm. The graph relative to the NDs shows the characteristic peaks of the diamond: the plane (111) at approximately 44° and the plane (220) at approximately 75°. The XRD spectrum of the p-CNOs produced by the thermal reaction shows significant differences from that of the nano-diamonds: the two main peaks of the diamonds have disappeared and the growth of the graphitic peaks occurs after the annealing process. The XRD spectrum shows four peaks: the plane (002) at approximately 26°, the plane (100) at approximately 43°, the plane (004) at approximately 54° and the plane (110) at approximately 79°. Above all, the XRD spectrum does not show the peaks typical of residual nano-diamonds that were present in the prior art documents, in particular it does not show peaks for the plane (220) at approximately 75°, for the plane (311) at approximately 90° and for the plane (400) at approximately 118°.

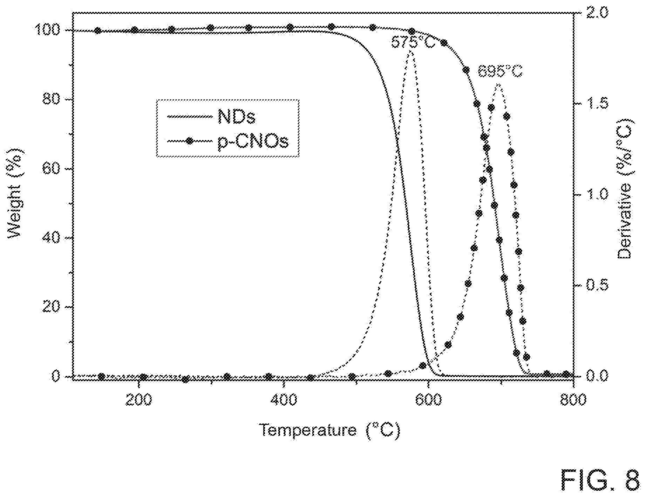

The result of the TGA measurements is shown in figure 8. Said measurements were performed in air at a heating rate of 10°C/minute up to 900°C, after bringing evenly the sample at 30°C for 5 minutes and then at 100°C for a further 20 minutes. The nano-diamonds show a decomposition temperature of 575°C; after the annealing process, the carbon nano-onions show a higher decomposition temperature, which suggests that the transformation has occurred with a greater thermal stability of the p-CNOs.

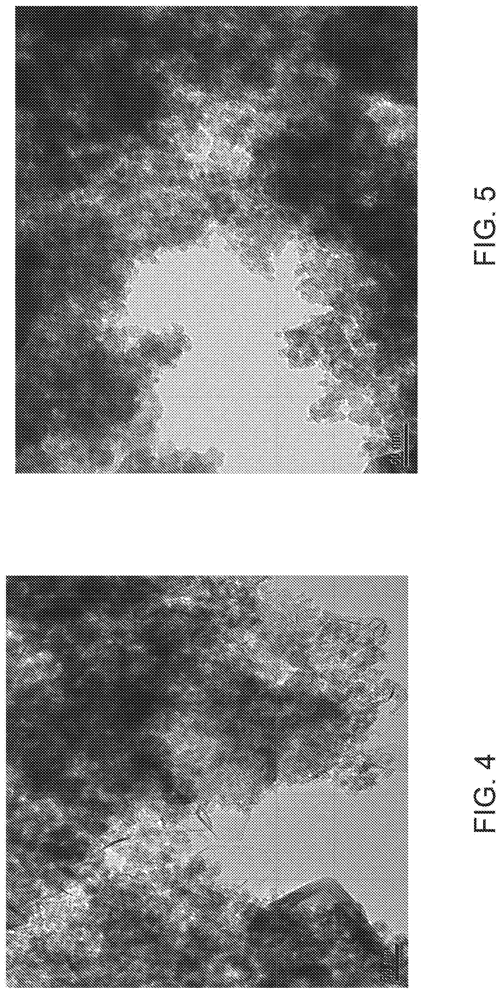

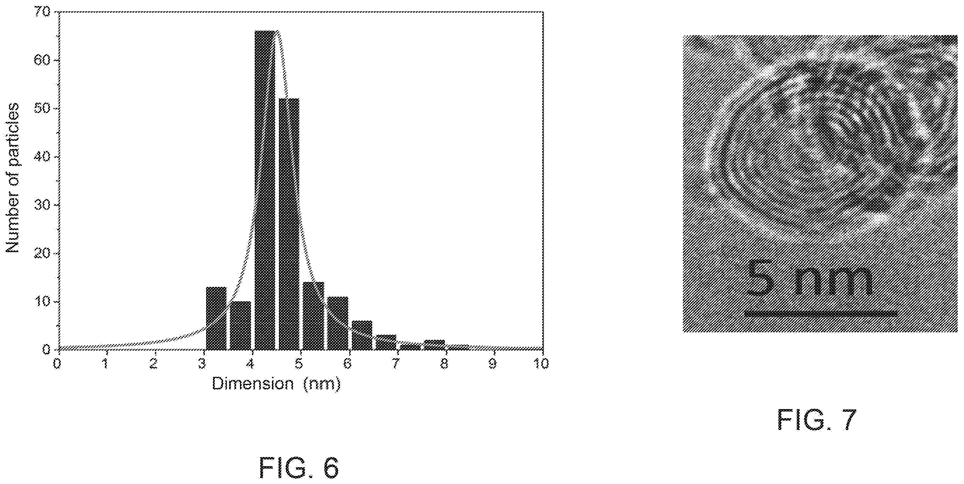

The results of the low resolution transmission electron microscope (LRTEM) analysis are shown in figures 4 and 5. Said analysis was used to observe the purity of the p-CNOs synthesized. Figure 4 shows a LRTEM image of p-CNOs produced with the procedure of the state of the art and highlights the presence of various graphitic impurities such as nano-ribbons and graphite rods. Figure 6 shows a LRTEM image of p-CNOs produced with the procedure according to the invention and clearly reveals that the procedure applied to the second sample produces better p-CNOs in terms of purity.

The results of the high resolution transmission electron microscope (HRTEM) analysis are shown in figure 7. Said analysis was performed to characterize the carbon nano-materials and confirmed the conversion of the nano-diamonds into small dimension carbon nano-onions. In particular, the image of figure 8 shows that the individual CNOs have an average diameter of approximately 5 nm and are formed of 8-10 concentric graphitic shells.

To estimate the effective dimension of the p-CNOs obtained from the second sample, an analysis was carried out with atomic force microscope (AFM), after deposition on a silicon wafer of a solution of CNOs at the concentration of 0.01 mg/ml in NMP. The analysis of the dimension distribution (Figure 6) of approximately 200 single carbon onions clearly reveals the prevalence of CNOs with an average diameter of 5 nm (average: 5 ± 1.9 nm) .

All the objects of the invention have therefore been achieved.

## Claims

1. A method for obtaining high purity carbon nano-onions starting from nano-diamonds, comprising the steps of:
i) - heating the nano-diamonds up to a first predetermined temperature, comprised between 1,200 and 1,800°C, under conditions such as to produce a layer-by-layer carbonization of the nano-diamonds;
ii) - maintaining the first predetermined temperature constant for a first predetermined time so as to convert the nano-diamonds into carbon nano-onions; and
iii) - slowly cooling the carbon nano-onions at a temperature equal to or lower than 200°C;
wherein
the heating step i) is performed by means of at least two successive heating ramps, a first ramp in which the nano-diamonds are brought to a second predetermined temperature, greater than 1,000°C, and are maintained at said second predetermined temperature for a second predetermined time so as to start the layer-by-layer carbonization of nano-diamonds and to produce a mixture of nano-diamonds in the transformation step into carbon nano-onions, and a second ramp in which the mixture of nano-diamonds in the transformation step into carbon nano-onions is brought to said first predetermined temperature, then maintaining constant the first predetermined temperature for the first predetermined time; **characterized in that:**
a) the first ramp of the heating step i) is performed starting from a temperature of at least 700°C by operating with a heating rate ranging from 4 to 9°C/minute; **and in that, in combination,**
b) the second ramp of the heating step i) is performed by operating with a heating rate ranging between 0.5 and 3.5°C/minute;
c) the first predetermined time ranging between 50 and 70 minutes, and the second predetermined time being equal to at least half of the first predetermined time.

2. The method according to claim 1, **characterized in that** the heating step i) is preceded by a pre-heating step from ambient temperature to a temperature less than 1,000°C, followed by at least two successive heating ramps, with the nano-diamonds remaining at least at a third predetermined temperature, lower than the second predetermined temperature.

3. The method according to claim 2, **characterized in that** the pre-heating step is performed by means of three successive heating ramps: a first ramp in which the nano-diamonds are brought from ambient temperature to a temperature ranging between 150 and 250°C and are kept at said temperature for a predetermined time in the order of ten or some tens of minutes; a second ramp in which the nano-diamonds are brought from a temperature ranging between 150 and 250°C to a temperature ranging between 700 and 900°C and are kept at said temperature for a predetermined time of some tens of minutes, in any case longer than the maintenance time at the temperature reached via said first ramp; and a third ramp in which the nano-diamonds are brought from a temperature ranging between 700 and 900°C to said second predetermined temperature.

4. The method according to claim 2 or 3, **characterized in that** the pre-heating step has a duration ranging between 240 and 300 minutes.

5. The method according to one of the preceding claims, **characterized in that** the second ramp of the heating step i) is performed by operating with a heating rate lower than the heating rate with which the first ramp of the heating step i) is performed; and **in that**, in combination, the second predetermined time is less than the first predetermined time.

6. The method according to one of the preceding claims, **characterized in that** the second predetermined temperature is equal to at least 1,400°C; and **in that**, in combination, the first predetermined temperature is equal to at least 1,650°C.

7. The method according to one of the preceding claims, **characterized in that** the slow cooling step is performed in a duration of time equal to a few hours and in particular equal to at least 4 hours.

8. The method according to one of the preceding claims, **characterized in that** the starting nano-diamonds have an average size of the crystals not greater than 5 nm.

9. The method according to one of the preceding claims, **characterized in that** it further comprises an annealing step of the carbon nano-onions, performed at the end of the slow cooling step; the annealing step comprising a step of maintaining the carbon nano-onions at a temperature ranging between 400 and 500°C for the duration of a few hours, preceded by a heating step and followed by a cooling step, each performed by one only temperature variation ramp of the duration of at least 30 minutes.

## Patentansprüche

1. Verfahren zum Gewinnen hochreiner Kohlenstoff-Nano-Zwiebeln ausgehend von Nanodiamanten, umfassend die folgenden Schritte:
i) - Erwärmen der Nanodiamanten bis auf eine erste vorbestimmte Temperatur im Bereich zwischen 1.200 und 1.800 °C unter Bedingungen, die eine schichtweise Karbonisierung der Nanodiamanten bewirken;
ii) - Konstanthalten der ersten vorbestimmten Temperatur für eine erste vorbestimmte Zeit, um die Nanodiamanten in Kohlenstoff-Nano-Zwiebeln umzuwandeln; und
iii) - langsames Abkühlen der Kohlenstoff-Nano-Zwiebeln bei einer Temperatur gleich oder niedriger als 200 °C;
wobei
der Erwärmungsschritt i) mittels mindestens zweier aufeinanderfolgender Erwärmungsrampen durchgeführt wird, einer ersten Rampe, in der die Nanodiamanten auf eine zweite vorbestimmte Temperatur gebracht werden, die größer als 1.000 °C ist, und für eine zweite vorbestimmte Zeit bei der zweiten vorbestimmten Temperatur gehalten werden, um die schichtweise Karbonisierung von Nanodiamanten zu starten und eine Mischung von Nanodiamanten im Umwandlungsschritt in Kohlenstoff-Nano-Zwiebeln zu erzeugen, und einer zweiten Rampe, in der die Mischung von Nanodiamanten im Umwandlungsschritt in Kohlenstoff-Nano-Zwiebeln auf die erste vorbestimmte Temperatur gebracht wird, wobei dann die erste vorbestimmte Temperatur für die erste vorbestimmte Zeit konstant gehalten wird; **dadurch gekennzeichnet, dass**:
a) die erste Rampe des Erwärmungsschritts i) ab einer Temperatur von mindestens 700 °C durch Betreiben mit einer Erwärmungsrate im Bereich von 4 bis 9 °C/Minute durchgeführt wird; **und dadurch, dass in Kombination**
b) die zweite Rampe des Erwärmungsschritts i) durch Betreiben mit einer Erwärmungsrate im Bereich zwischen 0,5 und 3,5 °C/Minute durchgeführt wird;
c) wobei die erste vorbestimmte Zeit im Bereich zwischen 50 und 70 Minuten liegt und die zweite vorbestimmte Zeit mindestens der Hälfte der ersten vorbestimmten Zeit entspricht.

2. Verfahren nach Anspruch 1, **dadurch gekennzeichnet, dass** dem Erwärmungsschritt i) ein Vorwärmschritt von Umgebungstemperatur auf eine Temperatur von weniger als 1.000 °C vorangeht, gefolgt von mindestens zwei aufeinanderfolgenden Erwärmungsrampen, wobei die Nanodiamanten mindestens auf einer dritten vorbestimmten Temperatur bleiben, die niedriger als die zweite vorbestimmte Temperatur ist.

3. Verfahren nach Anspruch 2, **dadurch gekennzeichnet, dass** der Vorwärmschritt mittels drei aufeinanderfolgender Erwärmungsrampen durchgeführt wird: einer ersten Rampe, in der die Nanodiamanten von Umgebungstemperatur auf eine Temperatur im Bereich zwischen 150 und 250 °C gebracht und für eine vorbestimmte Zeit in der Größenordnung von zehn oder einigen zehn Minuten bei dieser Temperatur gehalten werden; einer zweiten Rampe, in der die Nanodiamanten von einer Temperatur im Bereich zwischen 150 und 250 °C auf eine Temperatur im Bereich zwischen 700 und 900 °C gebracht und für eine vorbestimmte Zeit von einigen zehn Minuten bei dieser Temperatur gehalten werden, in jedem Fall länger als die Haltezeit bei der Temperatur, die über die erste Rampe erreicht wird; und einer dritten Rampe, in der die Nanodiamanten von einer Temperatur im Bereich zwischen 700 und 900 °C auf die zweite vorbestimmte Temperatur gebracht werden.

4. Verfahren nach Anspruch 2 oder 3, **dadurch gekennzeichnet, dass** der Vorwärmschritt eine Dauer im Bereich zwischen 240 und 300 Minuten aufweist.

5. Verfahren nach einem der vorhergehenden Ansprüche, **dadurch gekennzeichnet, dass** die zweite Rampe des Erwärmungsschritts i) durch Betreiben mit einer Erwärmungsrate durchgeführt wird, die niedriger als die Erwärmungsrate ist, mit der die erste Rampe des Erwärmungsschritts i) durchgeführt wird; und dadurch, dass in Kombination die zweite vorbestimmte Zeit kürzer als die erste vorbestimmte Zeit ist.

6. Verfahren nach einem der vorhergehenden Ansprüche, **dadurch gekennzeichnet, dass** die zweite vorbestimmte Temperatur gleich mindestens 1.400 °C ist; und dadurch, dass in Kombination die erste vorbestimmte Temperatur gleich mindestens 1.650 °C ist.

7. Verfahren nach einem der vorhergehenden Ansprüche, **dadurch gekennzeichnet, dass** der langsame Abkühlungsschritt in einer Zeitdauer gleich einigen Stunden und insbesondere gleich mindestens 4 Stunden durchgeführt wird.

8. Verfahren nach einem der vorstehenden Ansprüche, **dadurch gekennzeichnet, dass** die Ausgangs-Nanodiamanten eine mittlere Kristallgröße von nicht mehr als 5 nm aufweisen.

9. Verfahren nach einem der vorhergehenden Ansprüche, **dadurch gekennzeichnet, dass** es ferner einen Glühschritt der Kohlenstoff-Nano-Zwiebeln umfasst, der am Ende des langsamen Abkühlungsschritts durchgeführt wird; wobei der Glühschritt einen Schritt des Haltens der Kohlenstoff-Nano-Zwiebeln bei einer Temperatur im Bereich zwischen 400 und 500 °C für die Dauer von einigen Stunden umfasst, dem ein Erwärmungsschritt vorangeht und der von einem Abkühlungsschritt gefolgt ist, die jeweils von einer einzigen Temperaturänderungsrampe der Dauer von mindestens 30 Minuten durchgeführt werden.

## Revendications

1. Procédé permettant d'obtenir des nano-oignons de carbone de haute pureté à partir de nanodiamants, comprenant les étapes suivantes :
i) - le chauffage des nanodiamants jusqu'à une première température prédéterminée, comprise entre 1 200 et 1 800°C, dans des conditions telles qu'elles permettent une carbonisation couche par couche des nanodiamants ;
ii) - le maintien de la première température prédéterminée constante pendant un premier temps prédéterminé, de manière à convertir les nanodiamants en nano-oignons de carbone ; et
iii) - le refroidissement lent des nano-oignons de carbone à une température égale ou inférieure à 200°C ;
dans lequel
l'étape de chauffage i) est réalisée au moyen d'au moins deux rampes de chauffage successives, une première rampe au cours de laquelle les nanodiamants sont portés à une deuxième température prédéterminée, supérieure à 1 000°C, et sont maintenus à ladite deuxième température prédéterminée pendant un second temps prédéterminé afin de déclencher la carbonisation couche par couche des nanodiamants et de produire un mélange de nanodiamants à l'étape de transformation en nano-oignons de carbone, et une troisième rampe au cours de laquelle le mélange de nanodiamants à l'étape de transformation en nano-oignons de carbone est porté à ladite première température prédéterminée, puis le maintien de la première température prédéterminée constante pendant le premier temps prédéterminé ; **caractérisé en ce que** :
a) la première rampe de l'étape de chauffage i) est réalisée à partir d'une température d'au moins 700°C avec une vitesse de chauffage comprise entre 4 et 9°C/minute ; **et en ce que, conjointement**,
b) la deuxième rampe de l'étape de chauffage i) est réalisée avec une vitesse de chauffage comprise entre 0,5 et 3,5°C/minute ;
c) le premier temps prédéterminé étant compris entre 50 et 70 minutes, et le second temps prédéterminé étant égal à au moins la moitié du premier temps prédéterminé.

2. Procédé selon la revendication 1, **caractérisé en ce que** l'étape de chauffage i) est précédée d'une étape de préchauffage de la température ambiante à une température inférieure à 1 000°C, suivie d'au moins deux rampes de chauffage successives, les nanodiamants restant au moins à une troisième température prédéterminée, inférieure à la deuxième température prédéterminée.

3. Procédé selon la revendication 2, **caractérisé en ce que** l'étape de préchauffage est réalisée au moyen de trois rampes de chauffage successives : une première rampe au cours de laquelle les nanodiamants sont amenés de la température ambiante à une température comprise entre 150 et 250°C et sont maintenus à ladite température pendant une durée prédéterminée de l'ordre de dix ou de quelques dizaines de minutes ; une seconde rampe au cours de laquelle les nanodiamants sont portés d'une température comprise entre 150 et 250°C à une température comprise entre 700 et 900°C et sont maintenus à ladite température pendant une durée prédéterminée de quelques dizaines de minutes, en tout état de cause supérieure à la durée de maintien à la température atteinte via ladite première rampe ; et une troisième rampe au cours de laquelle les nanodiamants sont amenés d'une température comprise entre 700 et 900°C à ladite deuxième température prédéterminée.

4. Procédé selon la revendication 2 ou 3, **caractérisé en ce que** l'étape de préchauffage a une durée comprise entre 240 et 300 minutes.

5. Procédé selon l'une des revendications précédentes, **caractérisé en ce que** la deuxième rampe de l'étape de chauffage i) est réalisée avec une vitesse de chauffage inférieure à la vitesse de chauffage avec laquelle la première rampe de l'étape de chauffage i) est réalisée ; et **en ce que**, conjointement, la seconde durée prédéterminée est inférieure à la première durée prédéterminée.

6. Procédé selon l'une des revendications précédentes, **caractérisé en ce que** la deuxième température prédéterminée est égale à au moins 1 400°C ; et **en ce que**, conjointement, la première température prédéterminée est égale à au moins 1 650°C.

7. Procédé selon l'une des revendications précédentes, **caractérisé en ce que** l'étape de refroidissement lent est réalisée pendant une durée égale à quelques heures et en particulier égale à au moins 4 heures.

8. Procédé selon l'une des revendications précédentes, **caractérisé en ce que** les nanodiamants de départ ont une taille moyenne des cristaux ne dépassant pas 5 nm.

9. Procédé selon l'une des revendications précédentes, **caractérisé en ce qu'**il comprend en outre une étape de recuit des nano-oignons de carbone, réalisée à la fin de l'étape de refroidissement lent ; l'étape de recuit comprenant une étape consistant à maintenir les nano-oignons de carbone à une température comprise entre 400 et 500°C pendant quelques heures, précédée d'une étape de chauffage et suivie d'une étape de refroidissement, chacune étant réalisée par une seule rampe de variation de température d'une durée d'au moins 30 minutes.
